(19) **Europäisches Patentamt / European Patent Office / Office européen des brevets**

(11) **EP 3 474 200 A1**

(12) **EUROPEAN PATENT APPLICATION**
published in accordance with Art. 153(4) EPC

(43) Date of publication:
**24.04.2019 Bulletin 2019/17**

(21) Application number: **17813072.0**

(22) Date of filing: **16.05.2017**

(51) Int Cl.:
**G06Q 10/06** *(2012.01)*　　**G06Q 50/02** *(2012.01)*

(86) International application number:
**PCT/JP2017/018376**

(87) International publication number:
**WO 2017/217169 (21.12.2017 Gazette 2017/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.06.2016 JP 2016119267**

(71) Applicant: **Sony Corporation**
**Tokyo 108-0075 (JP)**

(72) Inventors:
- **OHASHI, Takeshi**
 **Tokyo 108-0075 (JP)**
- **SHINODA, Masataka**
 **Tokyo 108-0075 (JP)**
- **WU, Jianing**
 **Tokyo 108-0075 (JP)**
- **ONUMA, Tomoya**
 **Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, METHOD, AND PROGRAM**

(57) An information processing apparatus according to an embodiment of the present technology includes a controller. The controller generates an initial value of a first variable provided by indexing a value of a product on the basis of an attribute parameter group relating to an attribute of the product and controls. Also, the controller controls to cause to vary the first variable on the basis of a data group of growing conditions relating to the growing conditions of the product.

FIG.2

Printed by Jouve, 75001 PARIS (FR)

**Description**

Technical Field

The present technology relates to an information processing apparatus, a method, and a program, and, more particularly, to a technology that grasp a present value of a product that needs a long period growing and a production period (example includes cattle, for example).

Background Art

Grasping a present value of a product is extremely important to consider an investment to the product. There are proposed a variety of techniques using an information technology with the aid of a support to a movable property investment before the present application is filed.

Patent Literature 1 discloses a method of managing a risk about individual projects from milestone progress. However, since a living body such as a livestock product is complex, it is difficult to set and evaluate the milestone. Accordingly, it is difficult to apply the method of Patent Literature 1 to the livestock product as is.

Patent Literature 2 discloses a system that supports movable property evaluation of the livestock product. However, with the method of using an IC tag or a bar code to confirm existence of the livestock product, it is unfortunately difficult to detect fraud. In addition, in Patent Literature 2, an assessment of the livestock product is calculated from a predetermined evaluation and an achievement level of a management plan of the livestock product. Thus it is difficult to increase accuracy. Further, it is also difficult to deal with the market changing moment to moment.

Note that Non-Patent Literature 1 discloses a quantification technique to express words by vectorization in the technical field of natural language processing.

Citation List

Patent Literature

Patent Literature 1: Japanese Patent Application Laid-open No.2009-245388
Patent Literature 2: Japanese Patent Application Laid-open No.2009-122884

Non-Patent Literature

Non-Patent Literature 1: Tomas Mikolov, Kai Chen, Greg Corrado, and Jeffrey Dean. "Efficient estimation of word representations in vector space." ICLR 2013

Disclosure of Invention

Technical Problem

In an investment to beef cattle and a livestock farmer, it is difficult to estimate investment risks since it takes long time for shipping of a product, i.e., beef cattle and affecting factors are complex. Also, it was not easy for outside investors objectively grasp business conditions of livestock farmers in the past. In addition, not only for the investors, but also for the farmers themselves, it was not easy to grasp the present value of the product they want to know.

The present technology is made in view of the above-mentioned circumstances, and it is an object of the present technology to provide an information processing apparatus, a method, and a program being capable of showing a present value of a product in a growing process as appropriate.

Solution to Problem

In order to achieve the object, an information processing apparatus according to an embodiment of the present technology includes a controller.

The controller generates an initial value of a first variable provided by indexing a value of a product on the basis of an attribute parameter group relating to an attribute of the product and controls.

Also, the controller controls to cause to vary the first variable on the basis of a data group of growing conditions relating to the growing conditions of the product.

An information processing method according to other embodiment of the present technology includes a first step and a second step.

In the first step, an initial value of a first variable provided by indexing a value of a product is generated on the basis of an attribute parameter group relating to an attribute of the product.

In the second step, the first variable is controlled to be varied on the basis of a data group of growing conditions relating to the growing conditions of the product.

A program according to still other embodiment of the present technology causes the computer to execute a first step and a second step.

In the first step, an initial value of a first variable provided by indexing a value of a product is generated on the basis of an attribute parameter group relating to an attribute of the product.

In the second step, the first variable is controlled to be varied on the basis of a data group of growing conditions relating to the growing conditions of the product.

Advantageous Effects of Invention

As described above, according to the present technology, it is possible to show a present value of a product in a growing process as appropriate.

It should be noted that the effects described here are not necessarily limitative and may be any of effects described in the present disclosure.

Brief Description of Drawings

Fig. 1 is a schematic diagram showing an outline structure of an information system including an embodiment of the present technology.

Fig. 2 is a functional block diagram of the information system.

Fig. 3 is a block diagram showing information stored on a memory of Fig. 2.

Fig. 4 is a flowchart showing a basic operation of a cattle data server in a first embodiment.

Fig. 5 is a structural diagram of an MLP having two layers including a hidden layer for estimating an initial value of a predicted shipping price in the first embodiment and shown as an example of a recognizer provided as a result of machine learning.

Fig. 6 is a structural diagram of an RNN network structure for estimating a predicted shipping price that reflects growing conditions in the first embodiment and shown as an example of a recognizer provided as a result of machine learning.

Fig. 7 is a flowchart showing a basic operation of a cattle data server in a second embodiment.

Fig. 8 is an illustrative captured image for existence confirmation of livestock A in the second embodiment.

Fig. 9 is a flowchart showing a basic operation of a cattle data server in a third embodiment.

Fig. 10 is an illustrative text group used in the third embodiment.

Fig. 11 is an illustrative diagram showing investment reference information generated in the third embodiment.

Mode(s) for Carrying Out the Invention

Hereinafter, embodiments of the present technology will be described with reference to the drawings.

<Overall structure including embodiments>

[Structure of information system 1]

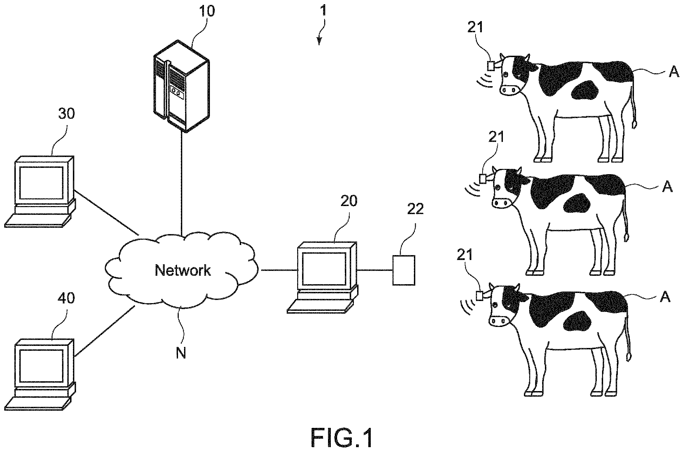

Fig. 1 is a schematic diagram showing an outline structure of an information system 1 including an embodiment of the present technology.

As shown in Fig. 1, the information system 1 includes a cattle data server 10, a producer terminal 20, an investor terminal 30, and a consumer terminal 40 as an illustrative information processing apparatus according to the embodiment. These server apparatus and terminal apparatuses are interconnectable via a network N. The network N may be, for example, the Internet, a mobile communication network, a local area network, or the like, and also may be a combined network of the plurality types of networks.

The information system 1 is introduced as an intermediary between, for example, a livestock farmer and an investment service such as cloud funding, and has a structure that may collect information about a basic specification of the livestock A, growing conditions of the livestock A from a livestock farmer to the cattle data server 10, and provide the investor terminal 30 with information that contributes to reference of an investment. Examples of the cattle include an industrial animal such as beef cattle, a milk cow, a fighting dog, a horse, a tuna, and the like, for example. The below illustrates the beef cattle.

One or a plurality of livestock A wears each wearable sensor 21 attached by a producer. The wearable sensor 21 may output output values including at least one or more data items selected from a body temperature, a heart rate, the number of steps, location information, an estrus state, and the number of chewing of the livestock A as output data items. In this embodiment, all of the body temperature, the heart rate, the number of steps, the location information, the estrus state, the number of chewing of the livestock A will be output.

A sensor data collector 22 connected to a producer terminal 20 has a function to collect output data items of the wearable sensor 21. The sensor data collector 22 is placed on (but not limiting to) a cattle shed, etc. and has also a function to receive the output data items of the wearable sensor 21, to add time information such as a received time thereto, and then to transmit the data items to the producer terminal 20.

The location information output to the sensor data collector 22 by the wearable sensor 21 may be combined information of latitude, longitude, and altitude. The location information is enough to specify the position of the livestock A wearing the wearable sensor 21 and may be therefore a device ID that identifies the sensor data collector 22 placed on a farm or the like, for example. The cattle data server 10 specifies the location information where the wearable sensor 21 (or livestock A wearing it) is present from the device ID.

A hardware structure of the cattle data server 10, the producer terminal 20, the investor terminal 30, and the consumer terminal 40 can be the same as a hardware structure of a general purpose computer. The producer terminal 20, the investor terminal 30, and the consumer terminal 40 may utilize a so-called smart device. The cattle data server 10 is implemented by a software program that executes information processing described in the present disclosure by using a computational resource of the general purpose computer.

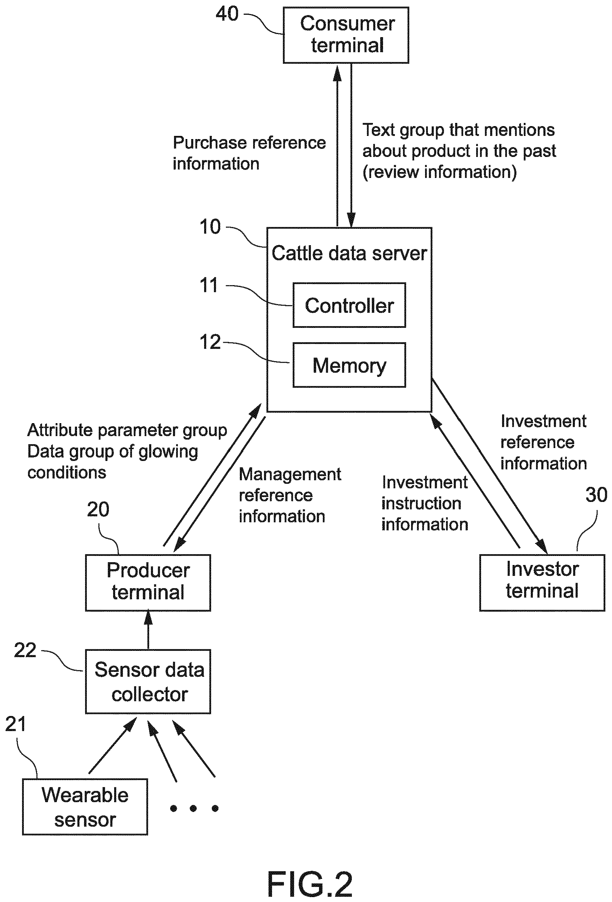

Fig. 2 shows a functional block diagram of the information system 1. As shown in Fig. 2, the cattle data server 10 includes a controller 11 and a memory 12. The controller 11 is a functional block that performs calculation and control implemented by a central processing unit.

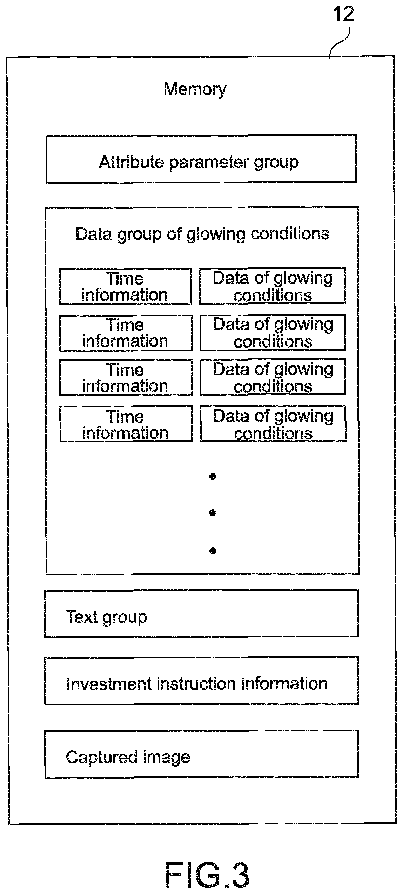

The memory 12 includes a ROM that stores a program executed by the central processing unit and a RMA that is used as a work memory or the like when the central processing unit executes processing, for example. Furthermore, the memory 12 may include a non-volatile memory such as an HDD (Hard Disk Drive) and a flash memory (SSD; Solid State Drive). According to this structure, the memory 12 may store an attribute parameter group, a data group of growing conditions, and a text group acquired from the consumer terminal 40. Fig. 3 shows the information stored on the memory 12.

[Information flow of information system 1]

In Fig. 2, data items including the attribute parameter group relating to the attributes of the livestock A are transmitted from the producer terminal 20 to the cattle data server 10 at a timing before bleeding the livestock A by a producer. Also, at the timing of bleeding the livestock A, data items including the data group of growing conditions relating to the growing conditions of the livestock A are transmitted.

The attribute of the livestock A is specification information inherent to the livestock A including, for example, gene information, surrogate mother cow specification, fertilized egg and sperm information, an evaluation of a DNA, an image, and an embryologist, disease tolerance estimated from a blood line, and an evaluation value for meat quality (A3, A4, A5, etc.).

The attribute parameter group is a parameter bundle of respective attributes of the livestock A. The attributes of the livestock A including discrete information may have a parameter having a multi-dimensional vector data structure. On the other hand, the attributes including one-dimensional continuous information may have a parameter having a linear continuous value data structure. Thus, the attribute parameter group may include both of the parameter having a multi-dimensional vector data structure and the parameter having a linear continuous value data structure and may further include a parameter having other data structure.

The timing before bleeding the livestock A refers to a point of time before the producer bleeds or fattens the livestock A and may be a point of time determining a factor (e.g., blood line, etc.) that affects a final shipping price of the livestock A. The timing before bleeding the livestock A includes a point of time when the producer selects bleeding cows and mother cows, a point of time when the fertilized egg is acquired, a point of time when the livestock A is fattened, and the like.

The growing conditions of the livestock A refers to the breeding conditions and the fattening conditions of the livestock A by the producer. The growing conditions of the livestock A may be grasped by a sensor output from the wearable sensor 21 attached to the livestock A by the producer and by an image captured by a fixed point camera or by a camera attached to a drone floating in air.

The data group of growing conditions is acquired by converting the above-described growing conditions into data. The data group of growing conditions may include the output data items of the wearable sensor 21. Also, the data group of growing conditions may include output data items that are output from the sensor data collector 22 by adding time information to the output data items of the wearable sensor 21. In addition, the data group of growing conditions may include a captured image of a subject including the livestock A.

In Fig. 2, management reference information is supplied from the cattle data server 10 to the producer terminal 20 at any timing. The management reference information may include an evaluation of the shipped livestock A in the market and market information

(investment information, a beef consumption trend, and the like). Also, the management reference information may include information that predicts an evaluation of the livestock A in the market, e.g., "predicted shipping price", at a point of time when the producer terminal 20 uploads the data group of growing conditions to the cattle data server 10.

Since the cattle data server 10 supplies the management reference information to the producer terminal 20, the producer makes use of the management reference information for farmer management including the type and number of cattle to be handles, breeding of beef cattle, the selection of a feedstuff, and the like.

In Fig. 2, data items including the text group that a producer of the livestock A mentions about the product produced by the producer of the livestock A in the past are transmitted from the consumer terminal 40 to the cattle data server 10. The text group that the producer of the livestock A mentions about the product produced in the past by the producer of the livestock A referred to here includes a sentence of an evaluation about taste and a price of beef processed from the shipped cattle by the producer in the past as an example, i.e., so-called review information.

The text group may include those collected via an information supply server (not shown) linking between the consumer terminal 40 and the cattle data server 10. Examples of the information supply server include a server of a portal site about gourmet information or of a product sales site of E-commerce. The text group may be generated from evaluation comments received from consumers of the product gathered on the site or may be generated by collecting character information of public internet bulletin boards by a crawler.

In Fig. 2, purchase reference information is supplied from the cattle data server 10 to the consumer terminal 40 at any timing. The purchase reference information is helpful when the consumers purchase beef. Examples of the purchase reference information include a producing district of cattle, the types of beef cattle, and breeding information acquired by the producer. Others include review information about the beef written by other consumers. Note that the purchase reference information may be supplied via the portal site, the product sales site, or the like.

Since the cattle data server 10 supplies the purchase reference information to the consumer terminal 40, the consumers can make use of the purchase reference information for reference information about product purchase. Also, in a case where the above-described portal site, the product sales site, or the like is linked, the purchase reference information can be made use of a supply of recommended service of the product that matches with a consumer's taste. An exchange of the review information provides the consumers with the benefits that a community of beef fans is formed and the consumers enjoy communication through the community, for example.

In Fig. 2, data items including investment reference information are transmitted from the cattle data server 10 to the investor terminal 30. Here, the investment reference information refers to information that contributes to investment reference by an investor. The investment reference information may include a predictive value that predicts the value of the livestock A at a certain future point of time. Examples of the predictive value include a shipping price (predictive shipping price) at the time of shipping of the livestock A.

In Fig. 2, data items including investment instruction information is transmitted from the investor terminal 30 to the cattle data server 10. Here, the investment instruction information shows how much money is invested in what kinds of producers or livestock from the investor of the investor terminal 30. The memory 12 of the cattle data server 10 stores the investment instruction information.

The cattle data server 10 may have a structure that the investment instruction information is utilized by the investment reference information of other investor. Also, the cattle data server 10 may have a structure that the investment instruction information is utilized in order to generate the management reference information transmitted to the producer terminal 20.

Note that at the time of the supply of the investment instruction information from the investor terminal 30 to the cattle data server 10 or of supplying the investment reference information from the cattle data server 10 to the investor terminal 30, the information system 1 may has a structure that the investment instruction information or the investment reference information is supplied via a server of a company that handles marketable securities.

Hereinafter, a structure and functions and effects of the cattle data server 10 (example of information processing apparatus) according to the embodiments will be described in more detail.

<First embodiment>

In this embodiment, the controller 11 generates an initial value of a first variable provided by indexing a value of the livestock A on the basis of an attribute parameter group relating to attribute parameters of the livestock A as an example of the product. Next, the controller 11 varies the first variable on the basis of a data group of growing conditions relating to the growing conditions of the livestock A. According to this embodiment having such a structure, the first variable relating to the growing conditions can be shown at any time. Accordingly, the producer can advantageously know the change of the first variable at any timing.

Hereinafter, the embodiment that the "predicted shipping price" is used as an example of the first variable will be disclosed. The predicted shipping price refers to a possible price that calves of 30 months in age are sold, in a case that a livestock farmer will ship the calves of 30 months in age, for example. According to this embodiment, while the producer tries a new raising method, for example, it will be possible to perceive a decrease or an increase of the predicted shipping price by the producer. For the producer, the information provided by this embodiment will be one reference to grasp whether or not the new raising method is preferable.

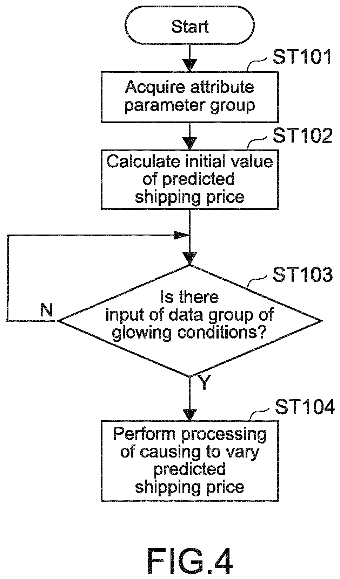

A flowchart of Fig. 4 shows a basic operation of the cattle data server 10. A main part of each processing shown in Fig. 4 is the controller 11. As shown in Fig. 4, the controller 11 acquires the attribute parameter group from the producer terminal 20 (ST101). The controller 11 causes the memory 12 to store the acquired attribute parameter group. The way to acquire the attribute parameter group from the producer terminal 20 by the cattle data server 10 is not limited. An implementation example is that if the producer enters an input to

an entry form of a cattle specification supplied from the cattle data server 10 on the producer terminal 20, for example, input matters are transmitted to the cattle data server 10.

Next, the controller 11 calculates the initial value of the predicted shipping price on the basis of the attribute parameter group acquired in ST101 (ST102). The predicted shipping price refers to a highly probable price as a selling price at the time of shipping. In this embodiment, the predicted shipping price is estimated in accordance with the attributes and the growing conditions of the livestock A. The predicted shipping price has a value that predicts an economic value at the time of shipping of the livestock A, and can be represented by a one-dimensional continuous value. As a specific prediction method, machine learning is used in this embodiment.

[Calculation of initial value of predicted shipping price]

Hereinafter, a method of calculating the predicted shipping price of the cattle (livestock A) in ST102. The cattle of about 30 months in age is generally shipped. This processing is to predict the price at the time of shipping. In this processing, cattle attributes are used to estimate the predicted shipping price. The cattle attributes include those relating to the livestock farmer that breeds cattle (hereinafter sometimes referred to as "farmer specification") and those relating to the cattle itself (hereinafter sometimes referred to as "cattle specification"). Specific contents of the farmer specification and the cattle specification are as follows:

The farmer specification may constitute the information including a farmer's scale, the number of workers, the number of beef cattle, a breed type of cattle handled, a feedstuff type, information about disease occurred in the past, latitude and longitude of a farm, a district name such as a state and a province, a country name, and an age of cattle shed or facilities. Note that the age of the facilities that raise breed cattle may constitute the information showing an aging degree.

The cattle specification may constitute the information including gene information, surrogate mother cow specification, fertilized egg and sperm information, an evaluation of a DNA, an image, and an embryologist, disease tolerance estimated from a blood line, and an evaluation value for meat quality (A3, A4, A5, etc.).

By using the above-described attributes in the machine learning, respective attributes need to be normalized. The number of workers and the number of beef cattle in the farmer specification can be used as is as input data for the machine learning. On the other hand, a prefecture name where a farm locates, information about a breed type of cattle, or the like includes discrete information, which is unable to be handled similarly. It is convenience to use the discrete information as a one-hot feature quantity. The one-hot feature quantity is a maximum value number of information which is a target of a dimensional number and is acquired by assigning 1 to a target dimension or assigning 0 to a non-target dimension.

For example, in a case where the prefecture name of the farm (it assumes Japan in this illustrative example) is converted into the one-hot feature quantity, there are 47-dimensional vectors where the dimensional vector corresponding to the prefecture name has a value of 1 and the other dimensional vectors have values of 0. For example, in a case where the prefecture name where the farm locates is the Nagano prefecture, the one-hot feature quantity is described as below. Note that the order of the Nagano prefecture is 20th. [0,0,0,0,0,0,0,0,0,0,0,0,0,0,0,0,0,0,0,1,0,0,0,0,0,0,0,0,0,0,0,0,0,0,0,0 ,0,0,0,0,0,0,0,0,0,0,0]

The feature quantity acquired by normalizing the attributes is called as an "attributes parameter". As apparent from the above-described description, a data format or a data type of the attribute parameter may be a numerical value or a multi-dimensional vector.

In a case where the controller 11 estimates the target predicted shipping price from the feature quantity, a method of the machine learning such as deep learning can be used. In this case, a large amount of sets of the feature quantity and data items showing the predicted shipping price in the feature quantity are prepared and the data items are learned by the method of supervised learning. Thus, a recognizer that can estimate the predicted shipping price toward a feature quantity where the predicted shipping price is unknown.

The data items input to the recognizer can be defined as multi-dimensional continuous values or the above-described one-hot feature quantity and the value to be estimated can be defined as one dimensional continuous values that represent the predicted shipping price. As an example method of implementing the recognizer, a method using the Multilayer Perceptron (MLP) will be described.

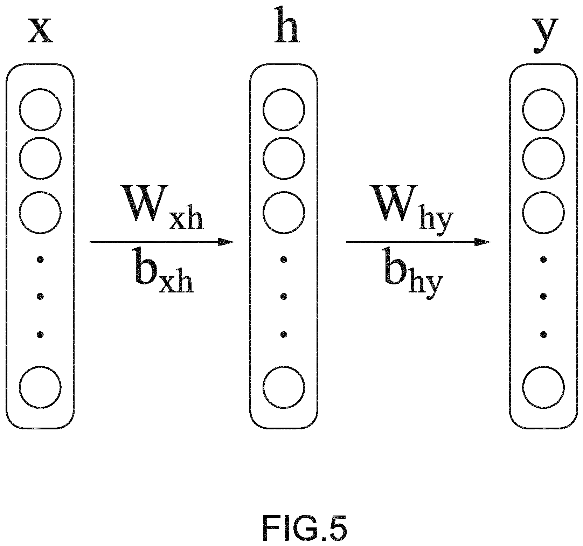

The MLP is a kind of a neural network. Fig. 5 shows a structural diagram of an MLP having two layers including a hidden layer. In this case, if the feature quantity is x, a function f (x) that represents a value of an output layer can be expressed by the following numerical expression 1.

[Numerical expression 1]

$$f(x) = b_{hy} + W_{hy}\big(s(b_{xh} + W_{xh}x)\big) \quad \text{(numerical expression 1)}$$

Here, $b_{xh}$ and $b_{hy}$ represent biases, $W_{xh}$ and $W_{hy}$ represent weighting matrices, a subscript xh represents a connection between the input and the hidden layer, and hy represents a connection between the hidden layer and an output layer. s represents an active function. For example, a logistic sigmoid function (numerical expression 2) may be used as the active function.

[Numerical expression 2]

$$s(a) = \frac{1}{1 + e^{-a}} \quad \text{(numerical expression 2)}$$

N data sets of the feature quantity x of learning data and the predicted shipping price y are expressed as $(x_n, y_n)$. The parameters of the biases and the weighting matrices in the MLP are expressed as w together. Network learning that estimates the predicted shipping price can be formulated for determining a parameter w that minimizes the value of the following expression (numerical expression 3). With this expression, the (numerical expression 1) outputs an output numerical value closer to the predicted shipping price in the learning data.

[Numerical expression 3]

$$E(w) = \sum_{n=1}^{} \|y_n - f(x_n)\|_2^2$$

with the proviso that $\| \cdot \|_2^2$ represents L2 norm

The (numerical expression 3) is generally called as the Euclidean (L2) loss. The w can be determined by performing the method such as the stochastic gradient descent on a learning data set. With an MLP network acquired by the method, the predicted shipping price f (x) of cattle can be estimated from the feature quantity x of the farmer specification and the cattle specification.

In addition, with the use of this predicted value, from the predicted shipping price of the front number of cattle and a shipping schedule that the farmer has, it may predict how much income at which timing. Furthermore, if the predicted income is summed up in a year period, predicted sales may be calculated. A prospect of the farmer's income is called as farmer's predicted income and predicted sales and is shown to the investor as investment reference information. However, the predicted shipping price is modelled as changing moment by moment depending on the growing conditions of cattle. Accordingly, according to this embodiment, processing of causing to vary the predicted shipping price is executed as described below.

[Varying predicted shipping price]

As shown in Fig. 4, the controller 11 of the cattle data server 10 next waits an input of the data group of growing conditions from the producer terminal 20 (ST103) and performs processing of causing to vary the predicted shipping price on the basis of the data group of growing conditions (ST104). The data group of growing conditions is generated as described below.

The wearable sensor 21 worn by the livestock A (cattle) as shown in Fig. 1 and Fig. 2 acquires information about a cattle's body temperature, a heart rate, the number of steps, location information including latitude and longitude, feeding timing, the number of chewing, an estrus state, a death state, and the like. The body temperature, the heart rate for a time unit, the number of steps, an estimated value of the estrus state, and the like acquired by the wearable sensor 21 may be represented as the multi-dimensional continuous values. To the multi-dimensional continuous values, time information is added by the wearable sensor 21 and the sensor data collector 22. As a result, the cattle data server 10 or the controller 11 may acquire the multi-dimensional continuous values in time series. In this embodiment, the data group of growing conditions is the multi-dimensional continuous values in time series.

On the other hand, the value to be estimated can be defined as the one dimensional continuous value that represent the predicted shipping price. Therefore, similar to the estimation of the initial value of the predicted shipping price, also in this processing that estimates the predicted shipping price which reflects the growing conditions later, the recognizer acquired by performing the machine learning by the neural network. There are several methods to implement the recognizer. Here, as an example, the method of a Recurrent Neural Network (RNN) will be described.

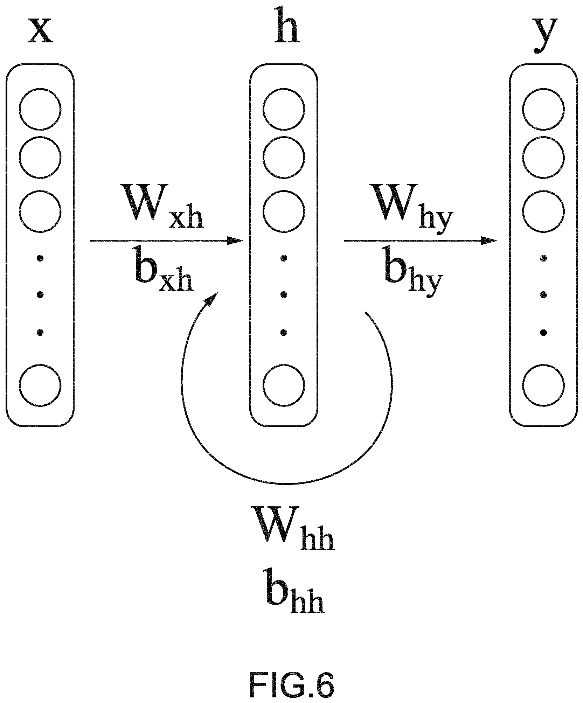

Fig. 6 shows the RNN network structure. As compared with the MLP shown in Fig. 5, feedback is added to the hidden layer. The feedback functions to input the value of the hidden layer at former time to the next time. When the data items relevant in time series are successively input, it functions to extract the information relevant in time series and to output a recognition result. With this function, recognition using time-series information is possible.

Taking an feature quantity at the time t for $x_t$, and the status of the hidden layer at the time before the time t for $h_t$, the function $f_t(x)$ that represents the value of the output layer can be represented by the following numerical equation 4.

[Numerical expression 4]

$$f_t(x) = b_{hy} + W_{hy}\bigl(s(b_{xh} + W_{xh}x_t + b_{hh} + W_{hh}h_{t-1})\bigr) \quad \text{(numerical expression 4)}$$

By using the (numerical expression 4) instead of the (numerical expression 1) in ST102 and applying the same method thereafter, an estimator of the predicted shipping price may be implemented at the time of the input of the time-series feature quantity.

With the above-described method, the recognizer that estimates the predicted shipping price may be implemented on the basis of the data items acquired by the wearable sensor 21 of the cattle.

<Second embodiment>

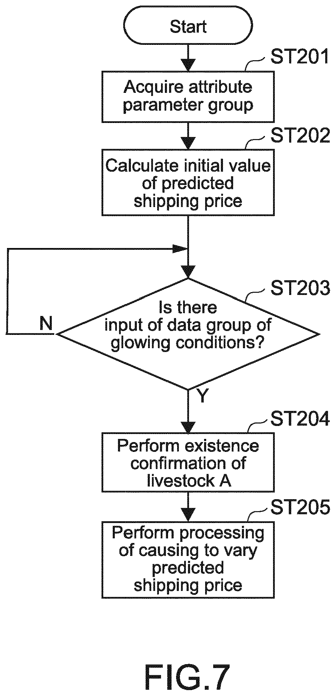

Fig. 7 is a flowchart showing a basic operation of the cattle data server 10 according to a second embodiment of the present technology. Hereinafter, configurations different from the first embodiment will be mainly described. Configurations similar to the first embodiment are denoted by the similar reference signs, and description thereof will be omitted or simplified.

As shown in Fig. 7, this embodiment is different from the first embodiment in that the cattle data server 10 and the controller 11 perform "existence confirmation of the livestock A" in ST204. Since the configurations other than the above are similar to the first embodiment, description thereof will be omitted.

In principle, one livestock A wears one wearable sensor 21. However, there is a possibility to unfairly increase the number of the livestock A by attaching a plurality of wearable sensors 21 to one livestock A and causing the respective wearable sensors 21 to transmit the data group of growing conditions. If such an unfair increase is essentially possible, it causes an increase of credit risks, an investment is not established, and it is inconvenient for both of the investor and the producer. Therefore, in this embodiment, existence confirmation of the livestock A is performed (S204), as shown in Fig. 7.

[Existence confirmation]

A timing that the controller 11 executes processing of the existence confirmation is not limited but may be when the cattle data server 10 acquires the data group of growing conditions. In this case, when the data group of growing conditions is determined to be input in ST203 of Fig. 7 (ST203, Yes), the existence confirmation (ST204) is performed directly before processing of causing to vary the predicted shipping price (ST205). Note that when the existence is determined to be not confirmed in ST204, the controller 11 terminates the processing of the flowchart of Fig. 7 as exception processing.

Also in the existence confirmation processing, the RNN (Recurrent Neural Network) used in the processing of ST202 (ST102 of the first embodiment) is used for the determination. In this processing, the feature quantity x to be input is the data group of growing conditions input in ST203, and the value to be estimated may be one-bit data type value. In this case, in the step of using the Euclidean (L2) loss (numerical expression 3), the following loss function called as the Cross Entropy Loss (numerical expression 5) is used.

[Numerical expression 5]

$$E(w) = -\sum_{n=1} p_n \log \hat{p}_n + (1 - p_n) \log(1 - \hat{p}_n) \quad \text{(numerical expression 5)}$$

Here, N represents the total number of the learning data. $p_n$ is teacher data of the learning data showing whether or not a cattle is present and takes a value of 1 or 0. Here, in a case where the cattle is correctly present, the data is set to 1. In a case where data is fraud to pretend that cattle is present though no cattle is present, the data is set to 0. p^ is a value estimated by the network and is represented by the following (numerical expression 6) using $f_t$ (x) of the (numerical expression 4) in a case where the sigmoid function of the (numerical expression 2) is used in the active function.

[Numerical expression 6]

$$\hat{p}_n = s(f_t(x_n)) \quad \text{(numerical expression 6)}$$

Learning of the recognizer about the cattle existence confirmation can be formulated such that the parameter w that minimizes the value of the (numerical expression 5) toward the learning data set of a label data that represents the feature quantity and the existence of cattle. In this embodiment, the Cross Entropy Loss of the (numerical expression 5) is used instead of the Euclidean (L2) loss of the (numerical expression 3). This is because the Cross Entropy Loss has better convergence in binary determination such as the cattle existence confirmation, i.e., whether or not the cattle is present.

By the above-described methods, the cattle existence confirmation may be estimated from the output data items of the wearable sensor 21. For example, in order to pretend that cattle is present, one cattle wears a plurality of the wearable sensors 21. Since data of the respective wearable sensors 21 is not fraud, it misrecognizes that a plurality of cattle are present. However, if such misrecognition is essentially possible, it causes an increase of credit risks, an investment is not established, and it is inconvenient for both of the investor and the producer.

In order to detect the fraud, the data items of the wearable sensors 21 of the whole cattle are input as the input to the above-described recognizer to form a learning unit. If one cattle wears a plurality of wearable sensor 21, a correlation between sensor data items is abnormally high. Therefore, with a learning method by the learning unit, this type of fraud is detectable. According to the structure of this embodiment, the existence confirmation of the livestock A may be accurately performed. For example, in a case where the information system 1 is used in order to supply the investment reference information and the like, it advantageously leads to a decrease of the credit risks.

[Existence confirmation by captured image]

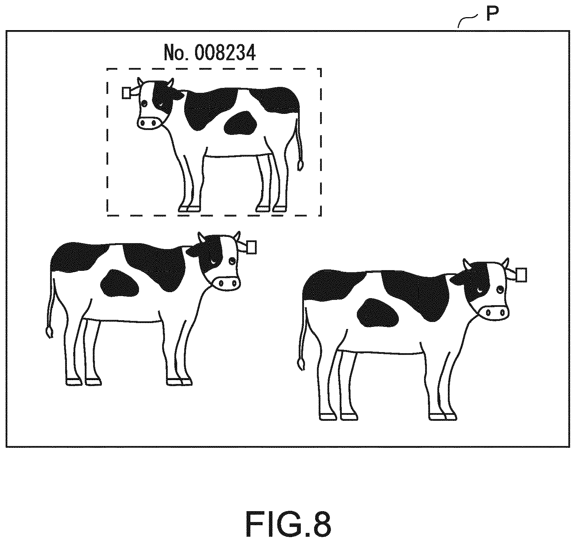

Furthermore, in this embodiment, the controller 11 performs the existence confirmation of cattle by using an image acquired from a camera attached to the cattle shed or a captured image P from a camera mounted to a drone for grazing management. Fig. 8 shows an example of the captured image P acquired from the cattle shed and the drone.

The controller 11 performs the existence confirmation of each individual cattle by using Boosting, SVM, CNN, or the like that is used for face image recognition or the like. The image recognition, living body information, and latitude and longitude information included in the data items output from the above-described wearable sensor 21 are used in combination as the feature quantities. Thus, it is possible to accurately execute the existence confirmation of cattle.

The controller 11 identifies individual by recognizing a face or a pattern on a body surface of cattle by using the above-described image recognition technology. Next, the controller 11 provides the identified individual with a mark shown in Fig. 8 (shown by a dashed line in Fig. 8) to cause the memory 12 to store the captured image P.

With the above-described structure, it is possible to confirm the true existence of each individual by the captured image. Thus, trust is advantageously provided in the investment using the information system 1.

<Third embodiment>

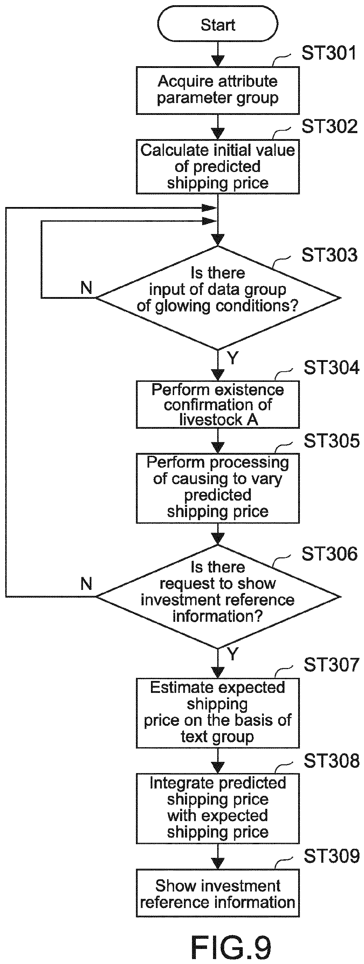

Fig. 9 is a flowchart showing a basic operation of the cattle data server 10 according to a third embodiment of the present technology. Hereinafter, configurations different from the above-described embodiments will be mainly described. Configurations similar to the above-described embodiments are denoted by the similar reference signs, and description thereof will be omitted or simplified.

As shown in Fig. 9, this embodiment is different from the above-described embodiments in that the cattle data server 10 and the controller 11 perform the processing in ST306 or later. Since the configurations other than the above are similar to the above-described embodiments, description thereof will be omitted.

In this embodiment, the cattle data server 10 and the controller 11 include a first structure (ST307) that performs "estimation of expected shipping price" on the basis of the text group relating to review information acquired from the consumer terminal 20, a second structure that integrates the predicted shipping price with the expected shipping price (ST308), and a third structure that shows the investment reference information (ST309).

The expected shipping price may be estimated (ST307) at any timing but, in this embodiment, at the time of an input of a request to the cattle data server 10 to request to show the investment reference information from the investor terminal 30 (S306). Since processing is on-demand, a computing resource is effectively used. Hereinafter, detailed processing of estimating the expected shipping price (ST307) will be described.

[Estimating expected shipping price]

In ST307, the expected shipping price is estimated from so-called consumer's review information and a beef reputation. On the basis of the consumer's review information collected on the cattle data server 10 in the information system 1, the cattle data server 10 extracts reputation information about the farmer and the beef cattle and estimates the expected shipping price.

With the information system 1 shown in Fig. 1 and Fig. 2, the consumers may acquire information about the livestock farmer that produces the beef via the cattle data server 10 and may write review about the eaten beef into the cattle data server 10. The consumers share the review with among them, consult the review on a selection of the beef fit to their tastes, write the result as review, and take a consuming behavior of this cycle.

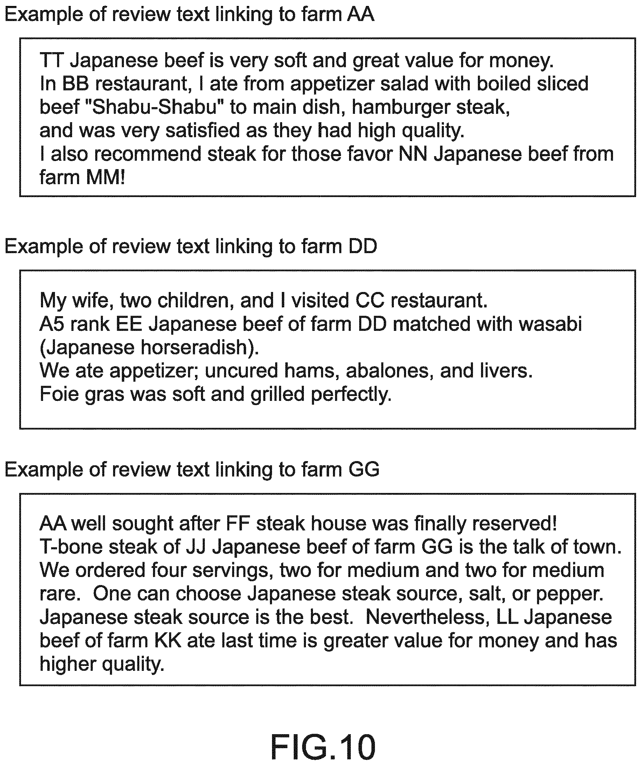

This embodiment makes use of the information about the beef cattle and the review thereof stored and estimates the expected shipping price provided to the investor. Fig. 10 shows examples of the review information written into the cattle data server 10. The text group shown in Fig. 10 is stored on the memory 12 of the cattle data server 10. The group of the text is linked to the producer ID and the controller 11 may grasp which producer produces the product that the text mentions.

Also, as shown in Fig. 10, lengths of sentences are not fixed and no scores or the like are added. Therefore, the text group is difficult to be used as is. In this embodiment, as a way to use the review information, a word2vec technology described in Non-Patent Literature 1 will be described. The word2vec is a technology of natural language processing proposed by Tomas Mikolov et al. and a quantification technique that expresses words by vectorization. By employing the technique described in Non-Patent Literature 1, respective words may be expressed as about 200-dimensional vectors having semantic information. Similarity of words may be provided and words may be added or subtracted.

The review sentences are processed by morphological analysis and separated into words. The respective words are expressed in vectors by the word2vec. There may be several ways to determine sentence vectors from word vectors. One simple way is to calculate an average vector of the words. The vector of the review sentences can be expressed as d by the following (numerical expression 7) where the number of words in the review is denoted as N, the nth word from the beginning is denoted as w, and the word2vec processing is denoted as v() .

[Numerical expression 7]

$$d = \frac{1}{N} \sum_{n=1}^{N} v(w_n) \qquad \text{(numerical expression 7)}$$

Also in a case of estimating the expected shipping price, with the aid of the MLP method using the numerical expressions 1 to 3, the machine learning is first performed on the neural network, the recognizer is generated, and the vector d of the numerical expression 7 is used for an input.

In other words, a shipping price of certain beef cattle in the past is regarded as a taught value, which is used together with the review sentences of the beef cattle as a set to generate a learning data set. Using the learning data set, the recognizer that estimates the predicted shipping price from the vector d of the review sentences is generated with the aid of the MLP method. Actually, the vector d is input to the generated recognizer. The controller 11 takes the value output from the recognizer as the estimated expected shipping price.

Also, the controller 11 generates a change in the expected shipping price for a unit time as "investment attention". For example, in a case where the expected shipping price is steeply increased, the investment attention is increased and its absolute value calculated is greater than that acquired in a case where the expected shipping price is gradually increased.

Next, the controller 11 executes processing of integrating the predicted shipping price varied until ST306 with the expected shipping price estimated at ST307 (ST308).

[Integration of investment reference information]

The expected shipping price based on the above-described consumer's review information may be output as a contradictory result from the predicted shipping price because information sources are different, e.g., information from the livestock farmer and information from the consumer, farmer specification and wearable information even in the livestock farmer, or the like. Consequently, even though the predicted shipping price and the expected shipping price are shown to the investor as is, they are inconsistent and it therefore arises a problem of less contributing to the investment reference.

In order to solve the problem, "investment reference information integration" processing in ST308 is performed. This processing may be that the investment reference information acquired in the respective information sources is recognized by the MLP. In this case, so as to output a non-contradictory result, it allows the recognizer to be learned.

Next, the controller 11 shows the integrated information in ST308 as the investment reference information (ST309).

[Showing investment reference information]

A method of showing the above-described investment reference information to the investor will be described. For example, the investment reference information is supplied by using a WEB service such that the investor may receive the investment reference information whenever the investor considers the investment.

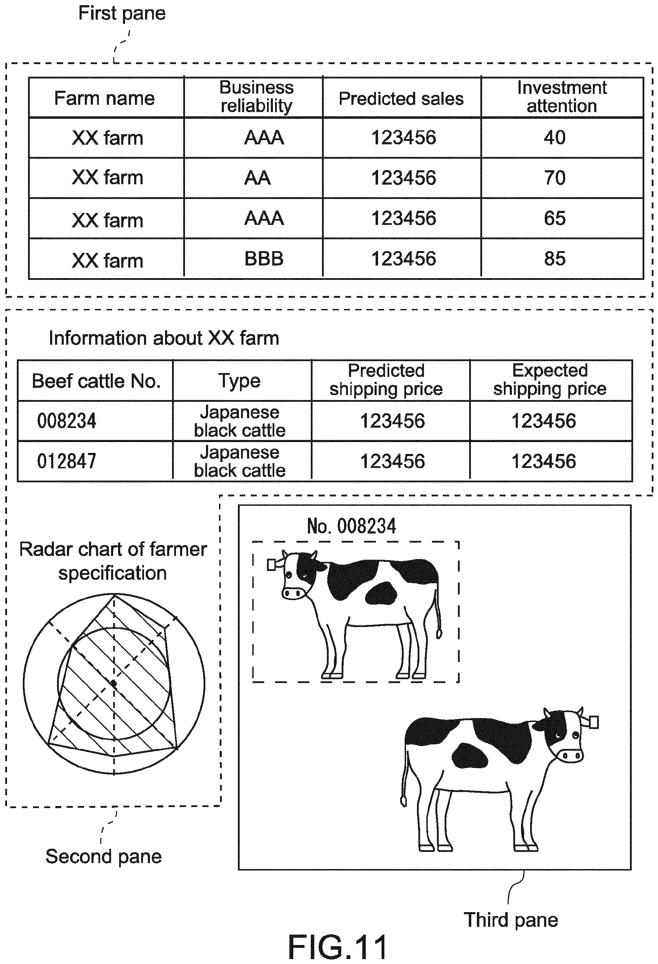

Fig. 11 shows the method of showing the investment reference information to the investor. Using the investment reference information output from the cattle data server 10, an WEB browser executed on the investor terminal 30, a proprietary application for a smart device, or the like generates an screen shown in Fig. 11.

The screen of Fig. 11 is divided into first to three panes. The first pane displays a list of livestock farmers. Examples of information displayed in the list of the livestock farmers include business reliability, predicted sales, the investment reference information including the investment attention and the like. The second pane displays a list of cattle that grow in the livestock farmer selected in the first pane. The second pane may include the farmer specification of the livestock farmer displayed in a radar chart format.

Examples of the information displayed in the list of cattle include an existence probability, the investment reference information, the predicted shipping price of cattle, the predicted sales of livestock farmer, time series graph data of the predicted income of livestock farmer, and investment information of other investor (= total investment money transition). The third pane displays an image of the captured image P acquired by the cattle existence confirmation processing in ST304 on which a mark showing the identified cattle is superimposed.

By referring to the information, the investor may effectively select and determine an investment destination and investment money and perform adequate investment rating. In addition, the controller 11 generates the captured image P on which the mark showing the identified cattle is superimposed and shows the captured image P to the investor as shown in Fig. 11. According to this embodiment shown, it is possible to visually indicated the existence of the livestock A and to provide a user of the information system 1 with reliability.

<Other embodiments>

Note that, in the description of the embodiments above, the beef cattle is illustrated as one example of a living body to be invested. However, it should be appreciated that the present technology is not limited to the case that the beef cattle is an investment target.

Other than the beef cattle, examples of the living bodies to be invested include a milk cow, a pig, a fighting dog, a horse, and the like. As a bleeding period is relatively long, the livestock of which value varies is preferable, but it is not limited thereto. The present technology can be implemented in a case where farmed tuna is the investment target.

In the present disclosure, it does not limit investment instruments and financial instruments provided by using the technical matters described in the above embodiments. For example, there may be financial instruments that if an investor covers a part of bleeding costs of one of the livestock A, the investor receives a part of profit in return depending on the burden charges at the time of shipping.

Note that in the above-described embodiments, the cattle data server is implemented by one server computer. It should be appreciated that a variety of infrastructures and platforms obvious to those skilled in the art may be used. The infrastructures and the platforms may be externally supplied in a form of IaaS or PaaS.

The present technology may also have the following structures.

(1) An information processing apparatus, including:
a controller that generates an initial value of a first variable provided by indexing a value of a product on the basis of an attribute parameter group relating to an attribute of the product and controls to cause to vary the first variable on the basis of a data group of growing conditions relating to the growing conditions of the product.

(2) The information processing apparatus according to (1), in which
the controller controls to estimate a second variable relating to an expected value of the product on the basis of a text group that mentions about a product produced by a producer of the product in past.

(3) The information processing apparatus according to (2), in which
the controller includes an expected value predictor provided by causing a neural network to learn a data set including a sample input of a vector expression of the text group and a sample output of a first variable of the product in past, and takes a value provided by inputting the attribute parameter group into the expected value predictor and outputting from the expected value predictor as the second variable of the product.

(4) The information processing apparatus according to (2) or (3), in which
the controller integrates the varied first variable and the estimated second variable.

(5) The information processing apparatus according to any (1) to (4), in which
the controller generates existence confirmation information of the product on the basis of the data group of growing conditions.

(6) The information processing apparatus according to (5), in which
the controller performs image processing to superimpose a mark indicating the product on a captured image including the product as a subject, and adds the captured image after the image processing to the existence confirmation information.

(7) The information processing apparatus according to any of (1) to (6), in which
the controller generates the initial value of the first variable on the basis of a producer attribute parameter group relating to attributes of the producer of the product and the attribute parameter group.

(8) The information processing apparatus according to any of (1) to (7), in which
the controller includes a recognizer provided by causing a neural network to learn a data set including a sample input of the attribute parameter group and a sample output, and takes information provided by inputting the attribute parameter group into the recognizer and outputting from the recognizer as the initial value of the first variable.

(9) The information processing apparatus according to any of (1) to (8), in which
the controller includes an estimator provided by causing a neural network to learn a data set including a sample input of the data group of growing conditions and a sample output, and causes to vary the first variable on the basis of information provided by inputting the data group of growing conditions into the estimator and outputting from the estimator.

(10) The information processing apparatus according to any of (1) to (9), in which
the first variable is a one-dimensional continuous value.

(11) The information processing apparatus according to any of (1) to (10), in which
each of data items included in the data group of growing conditions includes time information as a property.

(12) The information processing apparatus according to any of (1) to (11), in which
the data group of growing conditions includes output values from a wearable sensor worn by the product, and the output values of the wearable sensor include at least one or more data items selected from a body temperature, a heart rate, the number of steps, location information, an estrus state, and the number of chewing.

(13) The information processing apparatus according to any of (1) to (12), in which
the controller generates investment reference information that contributes to investment reference for the producer on the basis of a financial data group relating to financial conditions of the producer of the product and the varied first variable.

(14) The information processing apparatus according to (13), in which
the controller generates the investment reference information including investment attention toward the producer of the producer on the basis of the financial data group.

(15) An information processing method, including:

a first step of generating an initial value of a first variable provided by indexing a value of a product on the basis of an attribute parameter group relating to an attribute parameter of the product; and
a second step of controlling to cause to vary the first variable on the basis of a data group of growing conditions relating to the growing conditions of the product.

(16) A program executable by a computer, the program causing the computer to execute:

a first step of generating an initial value of a first variable provided by indexing a value of a product on the basis of an attribute parameter group relating to an attribute parameter of the product; and
a second step of controlling to cause to vary the first variable on the basis of a data group of growing conditions relating to the growing conditions of the product.

Reference Signs List

1    information system
10   cattle data server (information processing apparatus)
11   controller
12   memory
20   producer terminal
21   wearable sensor
22   sensor data collector
30   investor terminal
40   consumer terminal

**Claims**

1. An information processing apparatus, comprising:
a controller that generates an initial value of a first variable provided by indexing a value of a product on a basis of an attribute parameter group relating to an attribute of the product and controls to cause to vary the first variable on a basis of a data group of growing conditions relating to the growing conditions of the product.

2. The information processing apparatus according to claim 1, wherein
the controller controls to estimate a second variable relating to an expected value of the product on the basis of a text group that mentions about a product produced by a producer of the product in past.

3. The information processing apparatus according to claim 2, wherein
the controller includes an expected value predictor provided by causing a neural network to learn a data set including a sample input of a vector expression of the text group and a sample output of a first variable of the product in past, and takes a value provided by inputting the attribute parameter group into the expected value predictor and outputting from the expected value predictor as the second variable of the product.

4. The information processing apparatus according to claim 2, wherein
the controller integrates the varied first variable and the estimated second variable.

5. The information processing apparatus according to claim 1, wherein
the controller generates existence confirmation information of the product on the basis of the data group of growing conditions.

6. The information processing apparatus according to claim 5, wherein
the controller performs image processing to superimpose a mark indicating the product on a captured image including the product as a subject, and adds the captured image after the image processing to the existence confirmation information.

7. The information processing apparatus according to claim 1, wherein
the controller generates the initial value of the first variable on a basis of a producer attribute parameter group relating to attributes of the producer of the product and the attribute parameter group.

8. The information processing apparatus according to claim 1, wherein
the controller includes a recognizer provided by causing a neural network to learn a data set including a sample input of the attribute parameter group and a sample output, and takes information provided by inputting the attribute parameter group into the recognizer and outputting from the recognizer as the initial value of the first variable.

9. The information processing apparatus according to claim 1, wherein
the controller includes an estimator provided by causing a neural network to learn a data set including a sample input of the data group of growing conditions and a sample output, and causes to vary the first variable on the basis of information provided by inputting the data group of growing conditions into the estimator and outputting from the estimator.

10. The information processing apparatus according to claim 1, wherein
the first variable is a one-dimensional continuous value.

11. The information processing apparatus according to claim 1, wherein
each of data items included in the data group of growing conditions includes time information as a property.

12. The information processing apparatus according to claim 1, wherein
the data group of growing conditions includes output values from a wearable sensor worn by the product, and
the output values of the wearable sensor include at least one or more data items selected from a body temperature, a heart rate, the number of steps, location information, an estrus state, and a number of chewing.

13. The information processing apparatus according to claim 1, wherein
the controller generates investment reference information that contributes to investment reference for the producer on a basis of a financial data group relating to financial conditions of the producer of the product and the varied first variable.

14. The information processing apparatus according to claim 13, wherein
the controller generates the investment reference information including investment attention toward the producer of the producer on the basis of the financial data group.

15. An information processing method, comprising:

a first step of generating an initial value of a first variable provided by indexing a value of a product on a basis of an attribute parameter group relating to an attribute parameter of the product; and
a second step of controlling to cause to vary the first variable on the basis of a data group of growing conditions relating to the growing conditions of the product.

16. A program executable by a computer, the program causing the computer to execute:

a first step of generating an initial value of a first variable provided by indexing a value of a product on a basis of an attribute parameter group relating to an attribute parameter of the product; and
a second step of controlling to cause to vary the first variable on the basis of a data group of growing conditions relating to the growing conditions of the product.

FIG.1

FIG.2

12

Memory

Attribute parameter group

Data group of glowing conditions

| Time information | Data of glowing conditions |
|---|---|
| Time information | Data of glowing conditions |
| Time information | Data of glowing conditions |
| Time information | Data of glowing conditions |

•
•
•

Text group

Investment instruction information

Captured image

# FIG.3

Start

ST101

Acquire attribute
parameter group

ST102

Calculate initial value
of predicted
shipping price

ST103

Is there
input of data group of
glowing conditions?

N

Y

ST104

Perform processing
of causing to vary
predicted
shipping price

FIG.4

$x$ $h$ $y$

$$W_{xh}$$
$$b_{xh}$$

$$W_{hy}$$
$$b_{hy}$$

FIG.5

FIG.6

Start

ST201

Acquire attribute
parameter group

ST202

Calculate initial value
of predicted
shipping price

ST203

Is there
input of data group of
glowing conditions?

N

Y

ST204

Perform existence
confirmation of
livestock A

ST205

Perform processing
of causing to vary
predicted
shipping price

FIG.7

21

FIG.8

Start

ST301
Acquire attribute
parameter group

ST302
Calculate initial value
of predicted
shipping price

ST303
Is there
input of data group
of glowing conditions?

N

Y

ST304
Perform existence
confirmation of
livestock A

ST305
Perform processing
of causing to vary
predicted
shipping price

ST306
Is there
request to show
investment reference
information?

N

Y

ST307
Estimate expected
shipping
price on the basis of
text group

ST308
Integrate predicted
shipping price
with expected
shipping price

ST309
Show investment
reference information

FIG.9

Example of review text linking to farm AA

TT Japanese beef is very soft and great value for money.
In BB restaurant, I ate from appetizer salad with boiled sliced
beef "Shabu-Shabu" to main dish, hamburger steak,
and was very satisfied as they had high quality.
I also recommend steak for those favor NN Japanese beef from
farm MM!

Example of review text linking to farm DD

My wife, two children, and I visited CC restaurant.
A5 rank EE Japanese beef of farm DD matched with wasabi
(Japanese horseradish).
We ate appetizer; uncured hams, abalones, and livers.
Foie gras was soft and grilled perfectly.

Example of review text linking to farm GG

AA well sought after FF steak house was finally reserved!
T-bone steak of JJ Japanese beef of farm GG is the talk of town.
We ordered four servings, two for medium and two for medium
rare. One can choose Japanese steak source, salt, or pepper.
Japanese steak source is the best. Nevertheless, LL Japanese
beef of farm KK ate last time is greater value for money and has
higher quality.

# FIG.10

First pane

| Farm name | Business reliability | Predicted sales | Investment attention |
|---|---|---|---|
| XX farm | AAA | 123456 | 40 |
| XX farm | AA | 123456 | 70 |
| XX farm | AAA | 123456 | 65 |
| XX farm | BBB | 123456 | 85 |

Information about XX farm

| Beef cattle No. | Type | Predicted shipping price | Expected shipping price |
|---|---|---|---|
| 008234 | Japanese black cattle | 123456 | 123456 |
| 012847 | Japanese black cattle | 123456 | 123456 |

Radar chart of farmer specification

No. 008234

Second pane

Third pane

FIG.11

## INTERNATIONAL SEARCH REPORT

| International application No. |
|---|
| PCT/JP2017/018376 |

### A. CLASSIFICATION OF SUBJECT MATTER
*G06Q50/02*(2012.01)i, *G06Q10/06*(2012.01)i

According to International Patent Classification (IPC) or to both national classification and IPC

### B. FIELDS SEARCHED

Minimum documentation searched (classification system followed by classification symbols)
G06Q50/02, G06Q10/06

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho  1971-2017   Toroku Jitsuyo Shinan Koho   1994-2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-52548 A  (Zenkoku Nikugyu Jigyo Kyodo Kumiai),<br>01 March 2007 (01.03.2007),<br>particularly, paragraphs [0009], [0014], [0038] to [0039], [0054] to [0057]<br>(Family: none) | 1,7-12,15,16<br>2-6,13,14 |
| Y<br>A | JP 7-8128 A  (Zenkoku Nogyo Kyodo Kumiai Rengokai),<br>13 January 1995 (13.01.1995),<br>particularly, paragraphs [0010] to [0016], [0035]<br>(Family: none) | 1,7-12,15,16<br>2-6,13,14 |

☒ Further documents are listed in the continuation of Box C.  ☐ See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    03 July 2017 (03.07.17) | Date of mailing of the international search report<br>    11 July 2017 (11.07.17) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2017/018376 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2008-148569 A  (Oki Electric Industry Co.,<br>Ltd.),<br>03 July 2008 (03.07.2008),<br>particularly, paragraphs [0006], [0009]<br>& US 2008/0147458 A1<br>particularly, paragraphs [0008], [0020] | 11,12<br>1-10,13-16 |
| A | JP 2015-141467 A  (Fujitsu Ltd.),<br>03 August 2015 (03.08.2015),<br>entire text; all drawings<br>(Family: none) | 1-16 |
| A | JP 2015-173605 A  (Fujitsu Ltd.),<br>05 October 2015 (05.10.2015),<br>entire text; all drawings<br>(Family: none) | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2009245388 A

• JP 2009122884 A

**Non-patent literature cited in the description**

• **TOMAS MIKOLOV ; KAI CHEN ; GREG CORRADO ; JEFFREY DEAN.** Efficient estimation of word representations in vector space. *ICLR,* 2013